(19) Europäisches Patentamt
European Patent Office
Office européen des brevets

(11) **EP 3 185 252 A1**

(12) **EUROPEAN PATENT APPLICATION**
published in accordance with Art. 153(4) EPC

(43) Date of publication:
**28.06.2017 Bulletin 2017/26**

(21) Application number: **15833977.0**

(22) Date of filing: **18.08.2015**

(51) Int Cl.:
*H01F 1/057* [(2006.01)]    *B22F 3/02* [(2006.01)]
*H01F 1/08* [(2006.01)]    *H01F 41/02* [(2006.01)]
*C22C 38/00* [(2006.01)]

(86) International application number:
**PCT/JP2015/073064**

(87) International publication number:
**WO 2016/027791 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.08.2014 JP 2014165953**

(71) Applicant: **Intermetallics Co. Ltd.**
**Nakatsugawa-shi, Gifu 509-9132 (JP)**

(72) Inventors:
• **UNE, Yasuhiro**
**Nagoya-shi**
**Aichi 463-0003 (JP)**

• **KUBO, Hirokazu**
**Nagoya-shi**
**Aichi 463-0003 (JP)**
• **SAGAWA, Masato**
**Nagoya-shi**
**Aichi 463-0003 (JP)**
• **SUGIMOTO, Satoshi**
**Sendai-shi**
**Miyagi 980-8577 (JP)**
• **MATSUURA, Masashi**
**Sendai-shi**
**Miyagi 980-8577 (JP)**
• **NAKAMURA, Michihide**
**Sendai-shi**
**Miyagi 980-8577 (JP)**

(74) Representative: **Hoeger, Stellrecht & Partner**
**Patentanwälte mbB**
**Uhlandstrasse 14c**
**70182 Stuttgart (DE)**

(54) **RFeB-BASED SINTERED MAGNET**

(57)    The problem addressed by the present invention is to provide an RFeB system sintered magnet which does not contain a heavy rare-earth element $R^H$ (Dy, Tb and Ho) in a practically effective amount and yet is suited for applications in which the magnet undergoes a temperature increase during its use. The RFeB system sintered magnet according to the present invention is an RFeB system sintered magnet containing at least one element selected from the group consisting of Nd and Pr as a rare-earth element R in addition to Fe and B while containing none of Dy, Tb and Ho, the magnet having a temperature characteristic value $t_{(100-23)}$ which satisfies $-0.58 < t_{(100-23)} < 0$, where $t_{(100-23)}$ is defined by the following equation:

$$t_{(100-23)} = \frac{H_{cj}(100) - H_{cj}(23)}{(100-23) \times H_{cj}(23)} \times 100$$

using $H_{cj}(23)$ which is the value of the coercivity at a temperature of 23°C and He(100) which is the value of the coercivity at a temperature of 100°C.

EP 3 185 252 A1

# Fig. 4

PRESENT EXAMPLE 2 (Dave_S OF POWDER: 0.67 $\mu$m)
COMPARATIVE EXAMPLE 3 (Id.: 1.32 $\mu$m)
COMPARATIVE EXAMPLE 4 (Id.: 3.30 $\mu$m)
COMPARATIVE EXAMPLE 5 (Id.: 4.10 $\mu$m)

**Description**

TECHNICAL FIELD

The present invention relates to an RFeB system sintered magnet containing R (rare-earth element), Fe (iron) and B (boron) as its principal components. In particular, the present invention relates to an RFeB system sintered magnet containing at least one element selected from the group consisting of Nd (neodymium) and Pr (praseodymium) as the principle rare-earth element R while containing none of Tb (terbium), Dy (dysprosium) and Ho (holmium) in a practically effective amount (these elements are hereinafter collectively called the "heavy rare-earth elements $R^H$").

BACKGROUND ART

An RFeB system sintered magnet is a permanent magnet produced by orienting and sintering an RFeB system alloy powder. This RFeB system sintered magnet, which was discovered in 1982 by Masato Sagawa et al., is characterized in that it has far better magnetic characteristics than the previously known permanent magnets and yet can be produced from comparatively abundant and inexpensive materials, i.e. rare earths, iron and boron.
It is expected that RFeB system sintered magnets will be increasingly in demand in various forms in the future, such as permanent magnets for motors used in home electrical appliances (e.g. air conditioners) or motors used in automobiles (e.g. hybrid cars and electric cars). Motors used in home electrical appliances or automobiles become considerably hot during their use. Therefore, due to a reason which will be described later, RFeB system sintered magnets having a high level of coercivity $H_{cj}$ have been in demand. The coercivity $H_{cj}$ is an index which shows the intensity of the magnetic field that makes the magnetization of a magnet equal to zero when the magnetic field is applied to the magnet in the opposite direction to the direction of magnetization. The greater the value of the coercivity $H_{cj}$ is, the higher the resistance to the reverse magnetic field is.
As the methods for increasing the coercivity in the RFeB system sintered magnet, the following methods have been known: The first method is to increase the amount of heavy rare-earth element $R^H$ contained in the RFeB system sintered magnet (for example, see Patent Literature 1). The second method is to decrease the particle size of the alloy powder used as the raw material for the RFeB system sintered magnet and thereby decrease the size of the crystal grain in the RFeB system sintered magnet to be eventually obtained (for example, see Non Patent Literature 1). In Non Patent Literature 1, no heavy rare-earth element $R^H$ is used.

CITATION LIST

PATENT LITERATURE

  Patent Literature 1: WO 2013/100010 A
  Patent Literature 2: WO 2006/004014 A

NON PATENT LITERATURE

Non Patent Literature 1: Togo Fukada and six other authors, "Evaluation of the Microstructural Contribution to the Coercivity of Fine-Grained NdFeB Sintered Magnets", Materials Transactions, The Japan Institute of Metals and Materials, Vol. 53, No. 11, pp.1967-1971, issued on October 25, 2012

SUMMARY OF INVENTION

TECHNICAL PROBLEM

In motors used in home electrical appliances, automobiles and other applications, the temperature of the RFeB system sintered magnet changes during its use and increases to 100-180°C. Accordingly, in order to enhance the resistance to the reverse magnetic field over the entire range of temperatures during its use, the magnet needs to have a high level of coercivity $H_{cj}$. However, since the coercivity of RFeB system sintered magnet inevitably decreases with an increase in the temperature, it is also essential to minimize the rate of this decrease. The aforementioned RFeB system sintered magnet with the coercivity increased by the addition of a heavy rare-earth element $R^H$ has excellent characteristics not only in that its coercivity at room temperature is high, but also in that the rate of decrease in the coercivity due to a temperature increase is low. However, the addition of the heavy rare-earth element $R^H$ deteriorates some magnetic characteristics other than the coercivity $H_{cj}$, such as the residual magnetic flux density $B_r$ and maximum energy product $(BH)_{max}$. Furthermore, since heavy rare-earth elements $R^H$ are expensive and rare materials, the price of the RFeB system sintered magnet will increase and a stable supply of the magnet will be difficult.

The problem to be solved by the present invention is to provide an RFeB system sintered magnet which does not contain a heavy rare-earth element $R^H$ in a practically effective amount and yet has satisfactory temperature characteristics with only a minor rate of decrease in the coercivity $H_{cj}$ which accompanies a temperature increase.

SOLUTION TO PROBLEM

In three kinds of samples of RFeB system sintered magnets with different sizes of the crystal grain described in Non Patent Literature 1, the value of the coercivity $H_{cj}$ at each temperature increases with a decrease in the size of the crystal grain, whereas the rate of decrease in the coercivity $H_{cj}$ which accompanies a temperature increase does not show any significant change depending on the size of the crystal grain. However, an experiment (which will be described later) conducted by the present inventors has revealed that the rate of decrease in the coercivity $H_{cj}$ which accompanies a temperature increase can be reduced by decreasing the size of the crystal grain of the RFeB system sintered magnet. Thus, the present invention has been created.

The present invention developed for solving the previously described problem is an RFeB system sintered magnet containing at least one element selected from the group consisting of Nd and Pr as a rare-earth element R in addition to Fe and B while containing none of Dy, Tb and Ho, the magnet characterized in that:

a temperature characteristic value $t_{(100-23)}$ satisfies $-0.58 < t_{(100-23)} < 0$, where $t_{(100-23)}$ is defined by the following equation:

$$t_{(100-23)} = \frac{H_{cj}(100) - H_{cj}(23)}{(100-23) \times H_{cj}(23)} \times 100$$

using $H_{cj}(23)$ which is the value of the coercivity at a temperature of 23°C and $H_{cj}(100)$ which is the value of the coercivity at a temperature of 100°C.

In the present invention, the phrase "containing none of Dy, Tb and Ho" means that Dy, Tb and Ho, i.e. the heavy rare-earth element $R^H$, is not contained in a technically significant amount (or practically effective amount). This should be interpreted as including the case where the rare-earth element $R^H$ as an unavoidable impurity may be contained in a quantity equal to or lower than 0.1 atomic percent of the entire amount of R.

The temperature characteristic value $t_{(100-23)}$ is defined so that a higher value (or smaller absolute value) of $t_{(100-23)}$ means a lower rate of decrease in the coercivity $H_{cj}$ which accompanies a temperature increase and hence a more preferable characteristic for the purpose of the present invention. In the present invention, the temperature characteristic value $t_{(100-23)}$ is defined using the values of the coercivity $H_{cj}$ at the two temperatures of 23°C and 100°C. Regarding these temperatures, "23°C" is an average value of the room temperature, while "100°C" has been chosen for the following reason.

As already noted, a motor for automobiles or other applications may possibly undergo a temperature increase to approximately 180°C during its use. Accordingly, it is also possible to use $H_{cj}(180)$, i.e. the value of the coercivity at 180°C. However, as a result of an experiment conducted by the present inventors in which a temperature characteristic value $t_{(T-23)}$ defined by the following equation using the value of the coercivity at T degrees Celsius $H_{cj}(T)$ was calculated,

$$t_{(T-23)} = \frac{H_{cj}(T) - H_{cj}(23)}{(T-23) \times H_{cj}(23)} \times 100$$

it was revealed that there was no reverse in the order of the temperature characteristic values of the samples when the temperature was within a range of $100°C \leq T \leq 180°C$. In other words, a sample having a better temperature characteristic value $t_{(100-23)}$ at T=100°C than the other samples also had better temperature characteristic values $t_{(T-23)}$ than the other samples at any temperature within the entire range of $100°C \leq T \leq 180°C$. Accordingly, calculating the temperature characteristic value $t_{(100-23)}$ is sufficient for knowing the order of temperature characteristics within the range of $100°C \leq T \leq 180°C$. Additionally, since the value $H_{cj}(100)$ of the coercivity at T=100°C is the largest value within the aforementioned temperature range, the use of the value at this temperature decreases the error of the value of the coercivity $H_{cj}(T)$ and consequently decreases the error of the temperature characteristic value.

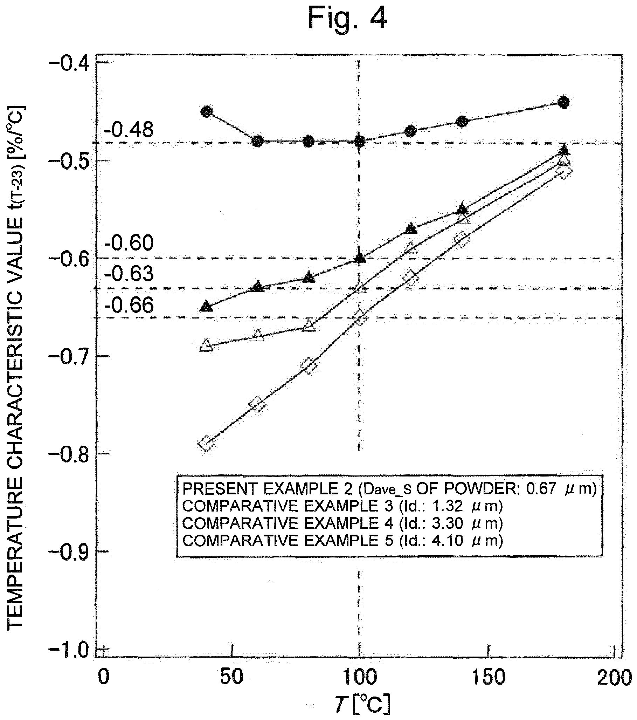

In the case of the RFeB system sintered magnet described in Non Patent Literature 1, the highest value of the temperature characteristic value $t_{(100-23)}$ was -0.58 (a value obtained for sample A in Fig.4B of the same literature). By comparison, an RFeB system sintered magnet created by the present inventors using the method which will be described later had the temperature characteristic value $t_{(100-23)}$ greater than the highest value in Non Patent Literature 1, i.e. 0.58, (or smaller than 0.58 in terms of the absolute value). On the other hand, the temperature characteristic value $t_{(100-23)}$ becomes smaller than zero, since the coercivity in an RFeB system sintered magnet decreases with an increase in the temperature.

It is possible to make the temperature characteristic value $t_{(100-23)}$ higher than -0.58 by making the grain size of the crystal grain constituting the RFeB system sintered magnet smaller than the conventional size. The smaller the grain size of the crystal grain is, the higher the temperature characteristic value $t_{(100-23)}$ can be. Practically, the temperature characteristic value $t_{(100-23)}$ can be easily increased to -0.53, and even further to -0.48 (i.e. within a range of $-0.58 < t_{(100-23)} \leq -0.48$).

More specifically, the area-based average grain diameter $D_{ave\_S}$ calculated from the circle-equivalent diameters D of the crystal grains determined from a microscopic image of a section of the RFeB system sintered magnet is made to be equal to or smaller than 1 $\mu$m. The "circle-equivalent diameter D" is the diameter of a circle whose area corresponds to the cross-sectional area S determined by an image analysis for each main-phase crystal grain of the alloy powder in an image (microscopic image) acquired with an electron microscope or similar device (i.e. $D = 2 \times (S/\pi)^{0.5}$). The "area-based average grain diameter $D_{ave\_S}$" is a circle-equivalent diameter on a microscopic image taken at a plane perpendicular to the axis of orientation of the sintered magnet, which is determined by accumulating the percentages of the sectional areas of the individual crystal grains in the total sectional area of all crystal grains in ascending order of the sectional area, and calculating the circle-equivalent diameter from the sectional area with which the accumulated value reaches 50 %. In Non Patent Literature 1, a number-based average grain diameter is used, which is determined from the circle-equivalent diameter of the section of a crystal grain with which the number of crystal grains arrayed in ascending order of the sectional area reaches 50 % of the total number of the crystal grains. The number-based average grain diameter places heavier weights on crystal grains with smaller areas and tends to have a smaller value than the area-based average grain diameter $D_{ave\_S}$. Accordingly, although the smallest value of the number-based average grain diameter as set forth in Non Patent Literature 1 is 1 $\mu$m, the corresponding value of the area-based average grain diameter $D_{ave\_S}$ will be greater than 1 $\mu$m. By placing heavier weights on large-area crystal grains which significantly affect the magnetic characteristics, the area-based average grain diameter $D_{ave\_S}$ enables a more accurate evaluation than the number-based average grain diameter.

The RFeB system sintered magnet with the crystal grains having an area-based average grain diameter $D_{ave\_S}$ of equal to or smaller than 1 $\mu$m can be created by:

preparing a shaped body oriented by a magnetic field and subsequently sintering the shaped body, using an RFeB system alloy powder having an area-based average grain diameter $D_{ave\_S}$ of equal to or smaller than 0.7 $\mu$m, or more preferably equal to or smaller than 0.6 $\mu$m.

Such an RFeB system alloy powder can be obtained by performing an HDDR method (grain refining treatment) on a coarse powder of the raw material alloy to prepare coarse particles each having fine grains, pulverizing these coarse particles having fine grains by hydrogen decrepitation, and subsequently pulverizing the same powder by a jet milling method using helium gas. The HDDR method is a technique in which the coarse powder of the raw material alloy is heated in a hydrogen atmosphere of 700-900°C ("Hydrogenation") to decompose the RFeB system alloy into the three phases of $RH_2$ (a hydride of rare-earth R), $Fe_2B$ and Fe ("Decomposition"), after which the atmosphere is changed from hydrogen to vacuum, while maintaining the temperature, to desorb hydrogen from the $RH_2$ phase ("Desorption") and thereby cause a recombination reaction among the phases within each particle of the coarse powder of the raw material alloy ("Recombination").

To "prepare a shaped body" means preparing an object whose shape is exactly or roughly the same as that of the final product using an RFeB system alloy powder (this object is called the "shaped body"). The shaped body may be a compact produced by pressing an amount of RFeB system alloy powder into a shape that is exactly or roughly the same as that of the final product, or it may be an amount of RFeB system alloy powder (without being pressed) placed in a container (mold) having a cavity whose shape exactly or roughly the same as that of the final product (see Patent Literature 2). In the case where the shaped body is an amount of RFeB system alloy powder placed in a mold without being pressed, it is preferable to sinter the shaped body (i.e. the RFeB system alloy powder in the mold) without applying mechanical pressure to it. The omission of the application of the mechanical pressure to the RFeB system alloy powder from the process of preparing and sintering the shaped body provides the RFeB system sintered magnet with a high level of coercivity. This method also contributes to an increase in the coercivity in that it facilitates the handling of an RFeB system alloy powder with a small particle size (see Patent Literature 2).

ADVANTAGEOUS EFFECTS OF THE INVENTION

With the present invention, an RFeB system sintered magnet can be obtained which does not contain a heavy rare-earth element $R^H$ in a practically effective amount and yet has satisfactory temperature characteristics with only a minor rate of decrease in the coercivity $H_{cj}$ which accompanies a temperature increase. Therefore, the RFeB system sintered magnet according to the present invention is suited for applications in which the magnet undergoes a temperature increase during its use.

BRIEF DESCRIPTION OF DRAWINGS

Fig. 1 is a chart illustrating one example of the method for producing an RFeB system sintered magnet according to the present invention.
Fig. 2 is a graph showing the grain diameter distribution for RFeB system sintered magnets of Present Example 1 as well as Comparative Examples 1 and 2, determined from the circle-equivalent diameters of the sectional areas of the crystal grains based on a microscopic image at a plane perpendicular to the axis of orientation.
Fig. 3 is a graph showing the temperature characteristic value $t_{(T-23)}$ (including $t_{(100-23)}$ at T=100°C) of RFeB system sintered magnets of Present Example 1 and Comparative Examples 1 and 2.
Fig. 4 is a graph showing the temperature characteristic value $t_{(T-23)}$ (including $t_{(100-23)}$ at T=100°C) of RFeB system sintered magnets of Present Example 2 and Comparative Examples 3-5.

DESCRIPTION OF EMBODIMENTS

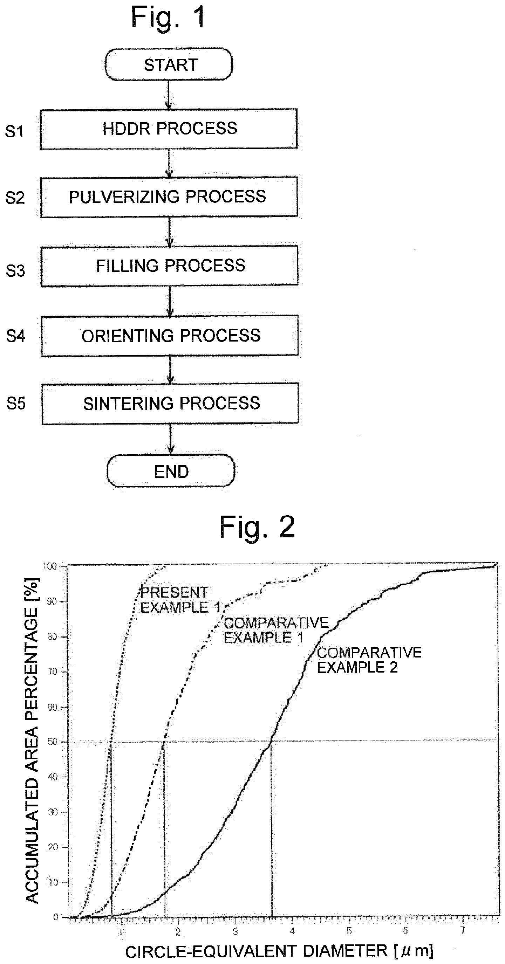

An embodiment of the RFeB system sintered magnet according to the present invention is described using Figs. 1-4.

EXAMPLE

Initially, one example of the method for producing the RFeB system sintered magnet according to the present invention is described using Fig. 1. The present production method includes five processes, i.e. the HDDR (Hydrogenation Decomposition Disproportionation Recombination) process (Step S1), pulverizing process (Step S2), filling process (Step S3), orienting process (Step S4) and sintering process (Step S5). A lump of SC alloy prepared by a strip casting (SC) method is used as the raw material. The SC alloy lump is normally in the form of flakes with each side measuring a few millimeters. In the present embodiment, two kinds of SC alloy lumps, labeled "1" and "2", with different compositions were used. Table 1 shows the composition of the SC alloy lumps 1 and 2. Neither the SC alloy lump 1 nor 2 contains heavy rare-earth elements $R^H$.

Table 1

| Composition of SC Alloy Lumps (Unit: mass %) | | | | | | | |
|---|---|---|---|---|---|---|---|
| | Nd | Pr | B | Cu | Al | Co | Fe |
| SC Alloy Lump 1 | 27.5 | 4.15 | 1.00 | 0.50 | 0.23 | 0.96 | bal. |
| SC Alloy Lump 2 | 30.51 | 0.07 | 0.98 | 0.10 | 0.22 | 0 | bal. |

In the HDDR process, the SC alloy lump is initially heat treated under hydrogen gas pressure ("Hydrogenation") to decompose the $R_2Fe_{14}B$ compound (main phase) in the SC alloy lump into the three phases of $RH_2$, $Fe_2B$ and Fe ("Disproportionation"). In the present example, the hydrogen gas pressure was set at 100 kPa, and the heat treatment was performed at a temperature of 950°C (first heat treatment temperature) for 60 minutes. In the subsequent steps, while the temperature is maintained at a second heat treatment temperature which is lower than the first heat treatment temperature, the atmosphere is changed to vacuum to desorb hydrogen from the $RH_2$ phase ("Desorption") and make this phase recombine with the $Fe_2B$ phase and Fe phase ("Recombination"). In the present example, the second heat treatment temperature was set at 800°C, and the vacuum was maintained for 60 minutes. As a result, an RFeB system polycrystalline body with an area-based average grain diameter $D_{ave\_S}$ of approximately 0.6 μm is obtained.
In the pulverizing process, the RFeB system polycrystalline body is initially exposed to hydrogen gas without being heated from the outside. Then, the RFeB system polycrystalline body automatically generates heat and becomes brittle by occluding hydrogen. Next, the RFeB system polycrystalline body is coarsely pulverized with a mechanical crusher to obtain coarse powder. This coarse powder is subsequently introduced into a complete jet mill plant with helium gas circulation system (manufactured by Nippon Pneumatic Mfg. Co., Ltd., which is hereinafter called the "He jet mill") and further pulverized. The He jet mill can generate a high-speed gas stream which is approximately three times as fast as the gas stream generated by an $N_2$ jet mill which uses nitrogen gas. The gas stream accelerates the material to high speeds, making the material collide repeatedly, whereby the material can be pulverized to an area-based average grain diameter $D_{ave\_S}$ of less than 1 $\mu$m, which cannot be achieved by the $N_2$ jet mill. In this manner, two samples of RFeB system alloy powder whose area-based average grain diameter $D_{ave\_S}$ did not exceed 0.7 $\mu$m were prepared, with $D_{ave\_S}$ being approximately 0.6 $\mu$m for the SC alloy lump 1 and approximately 0.67 $\mu$m for the SC alloy lump 2.

In the filling process, a mold having a cavity whose shape corresponds to that of the RFeB system sintered magnet as the final product is filled with the RFeB system alloy powder at a predetermined filling density (in the present example, 3.6 g/cm$^3$). Subsequently, in the orienting process, a magnetic field (in the present example, a pulsed direct-current magnetic field of 5 T) is applied to the RFeB system alloy powder in the mold to orient the alloy powder. In the sintering process, the oriented alloy powder held in the mold is contained in a sintering furnace and heated under vacuum (in the present embodiment, at 880°C for two hours) to sinter the powder. No mechanical pressure for molding the alloy powder is applied throughout the filling, orienting and sintering processes. By following the procedure described to this point, the RFeB system sintered magnet of the present embodiment is obtained. Hereinafter, the RFeB system sintered magnet created from the SC alloy lump 1 is called "Present Example 1", while the one created from the SC alloy lump 2 is called "Present Example 2".

As the comparative examples, RFeB system sintered magnets were additionally created using the RFeB system alloy powder prepared by pulverizing the same lot of the SC alloy lumps 1 and 2 as used for the present examples. The pulverization of the SC alloy lump was performed in such a manner that the area-based average grain diameter $D_{ave\_S}$ would be 1.4 $\mu$m (Comparative Example 1) and 3.1 $\mu$m (Comparative Example 2) for the SC alloy lump 1, as well as 1.32 $\mu$m (Comparative Example 3), 3.30 $\mu$m (Comparative Example 4) and 4.10 $\mu$m (Comparative Example 5) for the SC alloy lump 2. In these comparative examples, the HDDR process was omitted. In the pulverization process, the SC alloy was embrittled by the hydrogen occlusion method and then coarsely pulverized to prepare a coarse powder, which was further pulverized with the He jet mill to obtain the alloy powder. The filling, orienting, and sintering processes were performed by the same method as used for Present Examples 1 and 2.

The graph in Fig. 2 shows the grain diameter distribution for the RFeB system sintered magnet of Present Example 1 as well as those of Comparative Examples 1 and 2, determined from the circle-equivalent diameters of the sectional areas of the crystal grains based on a microscopic image at a plane perpendicular to the axis of orientation. The area-based average grain diameter $D_{ave\_S}$ calculated from this graph was 0.83 $\mu$m in Present Example 1, 1.78 $\mu$m in Comparative Example 1, and 3.65 $\mu$m in Comparative Example 2.

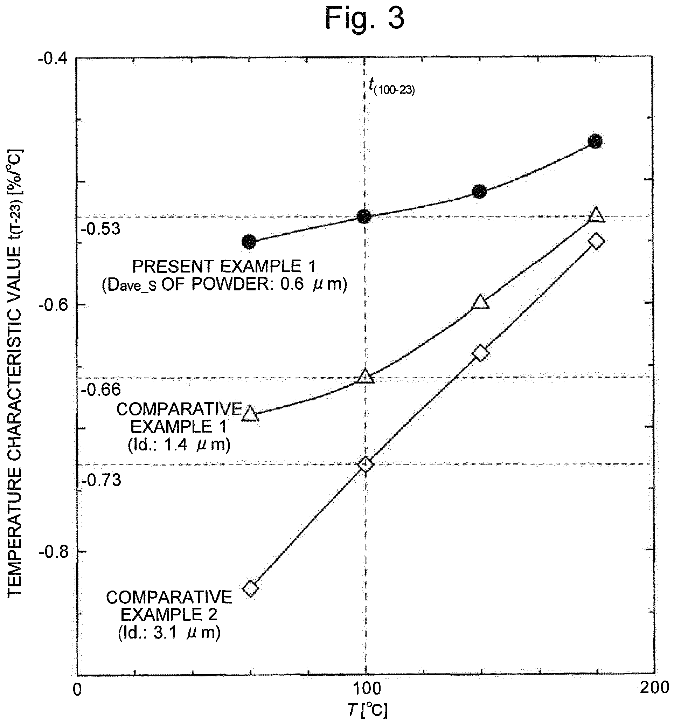

The graph in Fig. 3 shows the temperature characteristic values $t_{(T-23)}$ at T=60°C, 100°C, 140°C and 180°C determined on the basis of the data of the coercivity $H_{cj}$ acquired for the RFeB system sintered magnet of Present Example 1 as well as those of Comparative Examples 1 and 2. The data lying on the vertical broken line in this graph are the temperature characteristic values $t_{(100-23)}$ at T=100°C defined in the present invention. Although the coercivity $H_{cj}$ changes with the temperature, the vertical relationship (i.e. order) of the data of the Present Example 1 as well as the Comparative Examples 1 and 2 represented by the temperature characteristic value $t_{(T-23)}$ is always the same and independent of T. The temperature characteristic value $t_{(100-23)}$ in Present Example 1 was -0.53, which is higher than -0.66 in Comparative Example 1, -0.73 in Comparative Example 2, and -0.58, i.e. the highest value mentioned in Non Patent Literature 1. This result confirms that the RFeB system sintered magnet of Present Example 1 has better temperature characteristics than those of the Comparative Examples 1 and 2 as well as the one described in Non Patent Literature 1.

The graph in Fig. 4 shows the temperature characteristic values $t_{(T-23)}$ similarly determined for Present Example 2 and Comparative Examples 3-5. The temperature characteristic value $t_{(100-23)}$ in Present Example 2 was -0.48, which is higher than the values obtained in Comparative Examples 3-5 (-0.66 to -0.60) as well as the highest value mentioned in Non Patent Literature 1, -0.58. Furthermore, the temperature characteristic value $t_{(100-23)}$ in Present Example 2 is higher than the value in Present Example 1. The reason for this is because the content of Pr in Present Example 2 was 0.07 mass % and lower than the value in Present Example 1 (4.15 mass %).

**Claims**

1. An RFeB system sintered magnet containing at least one element selected from a group consisting of Nd and Pr as a rare-earth element R in addition to Fe and B while containing none of Dy, Tb and Ho, wherein:

    a temperature characteristic value $t_{(100-23)}$ satisfies -0.58<$t_{(100-23)}$<0, where $t_{(100-23)}$ is defined by a following

equation:

$$t_{(100\text{-}23)} = \frac{H_{cj}(100) - H_{cj}(23)}{(100-23) \times H_{cj}(23)} \times 100$$

using $H_{cj}(23)$ which is a value of a coercivity at a temperature of 23°C and $H_{cj}(100)$ which is a value of the coercivity at a temperature of 100°C.

2. The RFeB system sintered magnet according to claim 1, wherein the temperature characteristic value $t_{(100\text{-}23)}$ is within a range of $-0.58 < t_{(100\text{-}23)} \leq -0.48$.

3. The RFeB system sintered magnet according to claim 1 or 2, wherein an area-based average grain diameter $D_{ave\_S}$ calculated from a circle-equivalent diameters D of crystal grains determined from a microscopic image of a section of the RFeB system sintered magnet is equal to or smaller than 1 μm.

4. A method for producing the RFeB system sintered magnet according to one of claims 1-3, comprising steps of:

   preparing a shaped body oriented by a magnetic field and subsequently sintering the shaped body, using an RFeB system alloy powder having an area-based average grain diameter $D_{ave\_S}$ of equal to or smaller than 0.7 μm.

5. The method for producing the RFeB system sintered magnet according to claim 4, wherein the RFeB system alloy powder is prepared by performing an HDDR on a coarse powder of the raw material alloy to prepare coarse particles each having fine grains, pulverizing these coarse particles having fine grains by hydrogen decrepitation, and subsequently pulverizing the same powder by a jet milling method using helium gas.

# Fig. 1

```
        ┌─────────────┐
        │    START    │
        └─────────────┘
               │
S1  ┌─────────────────────────┐
    │      HDDR PROCESS        │
    └─────────────────────────┘
               │
S2  ┌─────────────────────────┐
    │   PULVERIZING PROCESS    │
    └─────────────────────────┘
               │
S3  ┌─────────────────────────┐
    │     FILLING PROCESS      │
    └─────────────────────────┘
               │
S4  ┌─────────────────────────┐
    │    ORIENTING PROCESS     │
    └─────────────────────────┘
               │
S5  ┌─────────────────────────┐
    │    SINTERING PROCESS     │
    └─────────────────────────┘
               │
        ┌─────────────┐
        │     END     │
        └─────────────┘
```

# Fig. 2

# Fig. 3

EP 3 185 252 A1

# Fig. 4

## INTERNATIONAL SEARCH REPORT

| International application No. |
| --- |
| PCT/JP2015/073064 |

**A. CLASSIFICATION OF SUBJECT MATTER**
*H01F1/057*(2006.01)i, *B22F3/02*(2006.01)i, *H01F1/08*(2006.01)i, *H01F41/02*(2006.01)i, *C22C38/00*(2006.01)n

According to International Patent Classification (IPC) or to both national classification and IPC

**B. FIELDS SEARCHED**

Minimum documentation searched (classification system followed by classification symbols)
H01F1/057, B22F3/02, H01F1/08, H01F41/02, C22C38/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2010-182827 A  (Toyota Motor Corp.),<br>19 August 2010 (19.08.2010),<br>paragraphs [0007], [0011] to [0017], [0027] to [0028]; fig. 1<br>& WO 2010/089652 A1<br>paragraphs [0007], [0019] to [0025], [0035] to [0036]; fig. 1<br>& US 2011/0286878 A1    & DE 112010000778 T<br>& CN 102308343 A | 1–2<br>3–5 |
| X<br>Y | JP 2010-219499 A  (TDK Corp.),<br>30 September 2010 (30.09.2010),<br>paragraphs [0009] to [0017], [0020] to [0035], [0047] to [0050], [0055] to [0059]<br>(Family: none) | 1–4<br>5 |

☒ Further documents are listed in the continuation of Box C.   ☐ See patent family annex.

| | |
| --- | --- |
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>02 November 2015 (02.11.15) | Date of mailing of the international search report<br>10 November 2015 (10.11.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
|---|
| PCT/JP2015/073064 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2009/122709 A1  (Hitachi Metals, Ltd.),<br>08 October 2009 (08.10.2009),<br>paragraphs [0002], [0058] to [0064]<br>& EP 2273513 A1<br>paragraphs [0002], [0058] to [0064]<br>& JP 5477282 B2          & US 2011/0025440 A1<br>& CN 101981634 A | 5 |
| Y | JP 2011-216720 A  (Nitto Denko Corp.),<br>27 October 2011 (27.10.2011),<br>paragraphs [0008], [0043] to [0051]; fig. 5<br>(Family: none) | 5 |
| P,A | WO 2014/142137 A1  (Intermetallics Co., Ltd.),<br>18 September 2014 (18.09.2014),<br>paragraphs [0015] to [0018], [0022] to [0029],<br>[0036]; fig. 1<br>(Family: none) | 1-5 |

Form PCT/ISA/210 (continuation of second sheet) (July 2009)

**EP 3 185 252 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013100010 A

- WO 2006004014 A

### Non-patent literature cited in the description

- Evaluation of the Microstructural Contribution to the Coercivity of Fine-Grained NdFeB Sintered Magnets. **TOGO FUKADA.** Materials Transactions. The Japan Institute of Metals and Materials, 25 October 2012, vol. 53, 1967-1971